# FASCICULE DE BREVET EUROPEEN

(11) **EP 0 524 901 B1**
(45) Date de publication et mention de la délivrance du brevet: **15.11.1995**
(21) Numéro de dépôt: 92440087.2
(22) Date de dépôt: 24.07.1992
(51) Int. Cl.: B60P 3/08

(54) **Garde-corps escamotable pour unité routière porte-véhicules**
Einziehbares Geländer für Strassenkraftfahrzeugtransporter
Retractable guard-rail for road-unit especially vehicle-carrier

(30) Priorité: 24.07.1991 FR 9109574
(43) Date de publication de la demande: 27.01.1993
(73) Titulaire: LOHR INDUSTRIE, 67980 Hangenbieten (FR)
(72) Inventeur: Godenir, Roland, F-67120 Soultz-les-Bains (FR)
(74) Mandataire: Metz, Paul

(56) Documents cités:
- DE-U- 8 610 072
- FR-A- 2 290 325
- FR-A- 2 353 416
- GB-A- 2 139 968

## Description

L'invention concerne un garde-corps arrière extensible pour la rallonge de la plate-forme supérieure de chargement d'une unité routière de transport, selon les caractéristiques du préambule de la revendication indépendante 1.

L'invention s'applique notamment à une unité de transport du type porte-véhicules comportant, à l'arrière de sa plate-forme supérieure de chargement, une rallonge coulissante à la manière d'un tiroir sortant de ladite plate-forme pour ménager un plan porteur supplémentaire.

Pour des raisons de sécurité, les constructeurs sont amenés à installer des garde-corps le long des bords de la plate-forme supérieure de chargement des unités routières porte-véhicules.

Ces garde-corps protègent le personnel contre les chutes lors des manoeuvres de chargement et de déchargement des véhicules pendant leur trajet à pied le long des bordures de la plate-forme supérieure.

Cependant, ces structures constituent une gêne pour les véhicules transportés de grande largeur, et de plus, doivent être démontées dans tous les cas où on est amené à rentrer la rallonge coulissante.

L'opération de démontage présente inévitablement tous les défauts d'utilisation de pièces, accessoires, structures additionnelles et autres, qui doivent faire l'objet d'une opération de montage puis de démontage, et enfin de stockage ou de rangement entre deux périodes d'utilisation.

Outre l'astreinte représentée par les opérations fréquentes de montage/démontage, le risque de perte ou d'endommagement représente le principal inconvénient.

La présente invention a pour but de remédier simultanément à l'ensemble de ces inconvénients.

A cet effet, elle se rapporte à un garde-corps arrière extensible pour unité routière de transport de véhicules présentant une plate-forme à rallonge arrière mobile, selon les caractéristiques de la partie caractérisante de la revendication indépendante 1.

La présente invention comporte de nombreux avantages que l'on peut regrouper comme suit :
. suppression des opérations de manipulation et de stockage de pièces lors de la rentrée de la rallonge coulissante ;
. simplicité et rapidité des manoeuvres de mise en place et de retrait ;
. maintien satisfaisant des cordes pendant le roulage à vide pour éviter bruit et dérèglages.

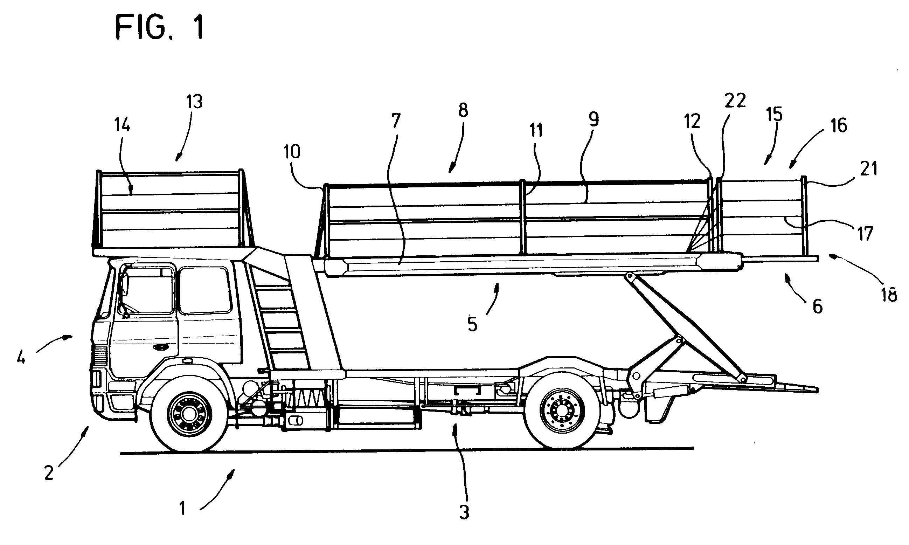

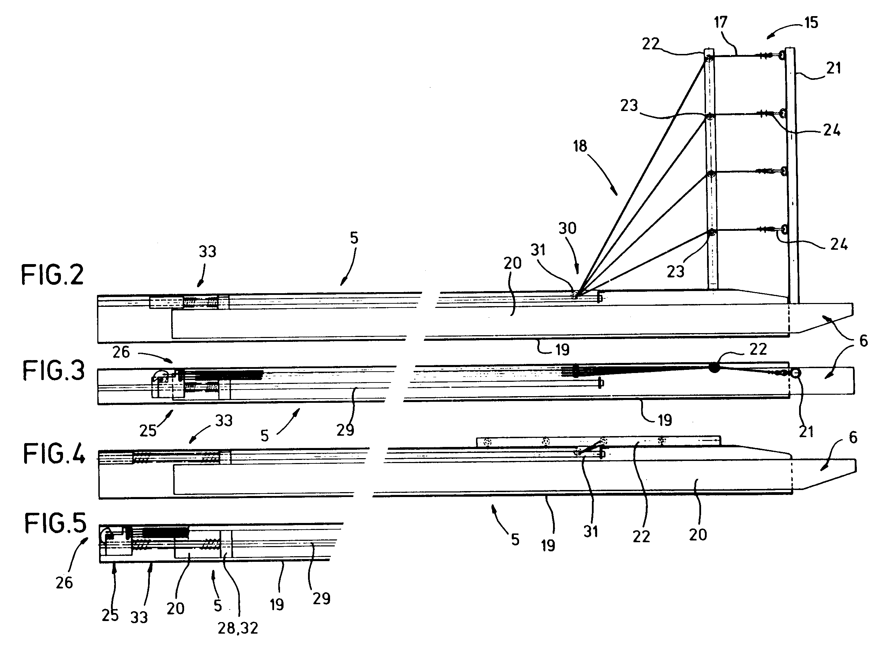

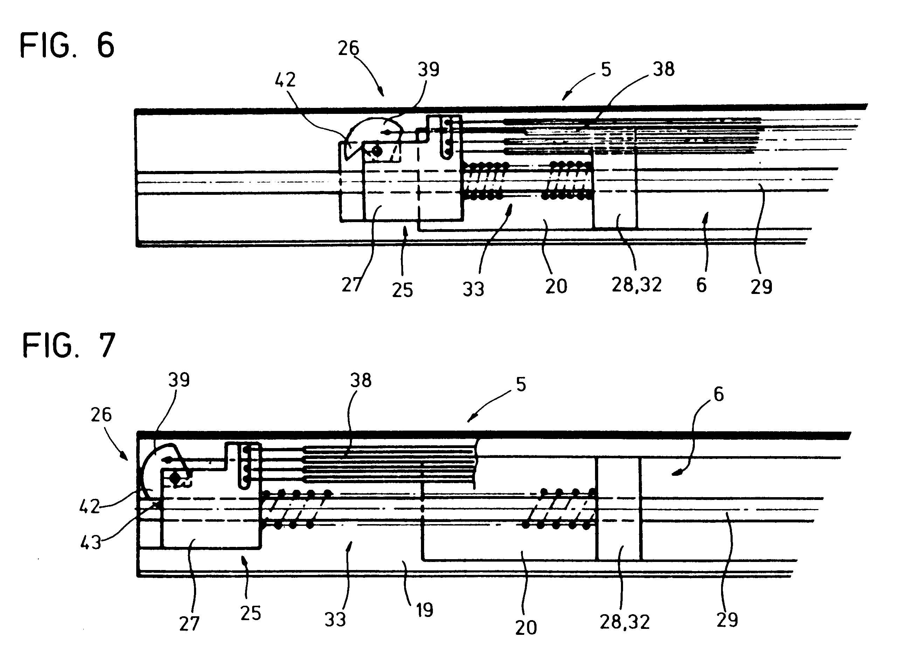

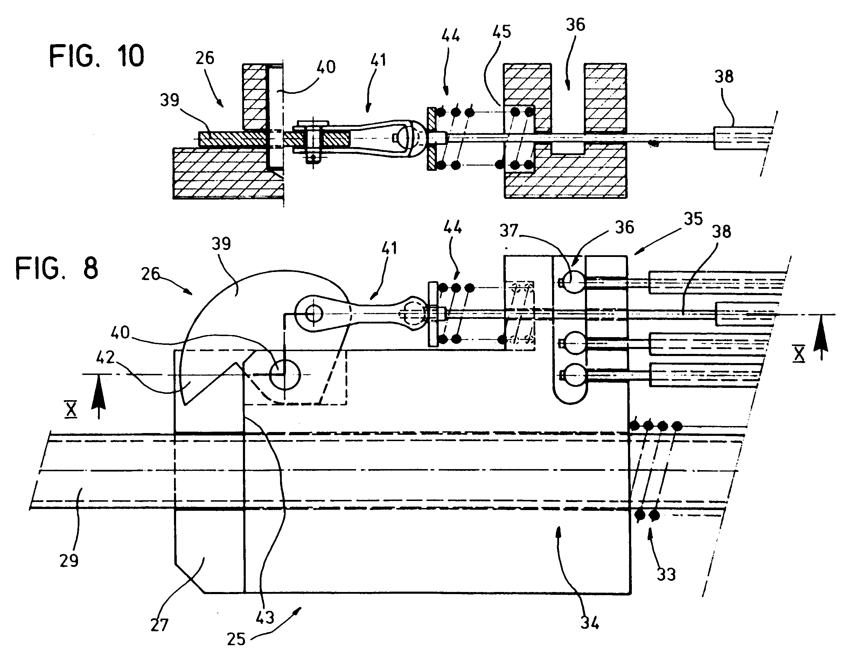

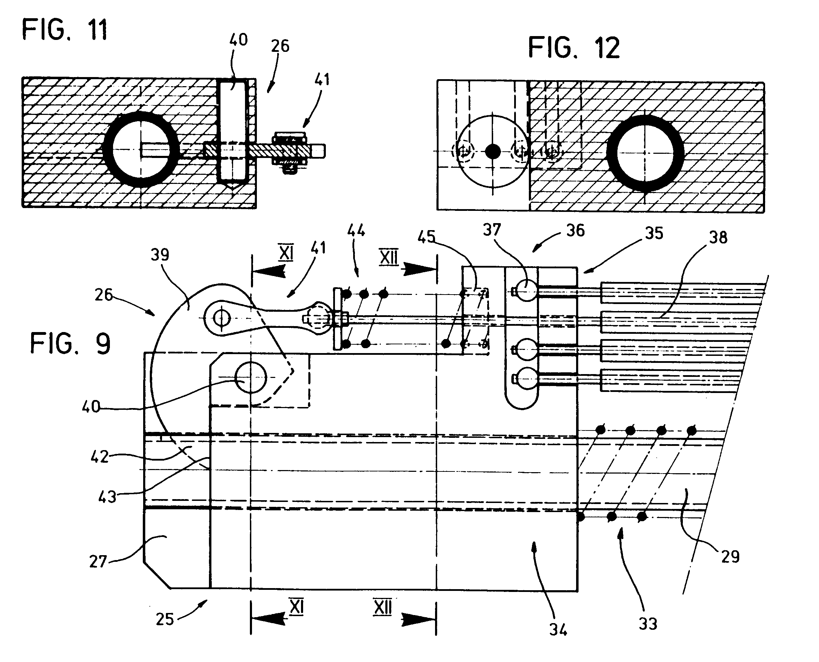

On comprendra mieux l'invention à l'aide de la description qui suit faite en référence aux figures annexées suivantes :
. la figure 1 est une vue générale de profil d'un camion porte-véhicules dont la plate-forme supérieure comporte une rallonge arrière équipée d'un garde-corps partiellement sorti ;
. la figure 2 est une vue de profil de la plate-forme, garde-corps encore en place, avant la rentrée totale de la rallonge en position escamotée ;
. la figure 3 est une vue en plan correspondant à la figure 2 ;
. la figure 4 est une vue de profil, montrant le garde-corps escamoté et la rallonge rentrée ;
. la figure 5 est une vue de dessus d'extrémité correspondant à la figure 4 ;
. la figure 6 est une vue agrandie de l'extrémité de la figure 3 ;
. la figure 7 est une vue agrandie de la figure 5 ;
. la figure 8 est une vue en plan du chariot de déplacement des liaisons à cordage en position déverrouillé ;
. la figure 9 est une vue en plan du chariot en position verrouillé ;
. la figure 10 est une coupe selon la ligne X-X de la figure 8 ;
. les figures 11 et 12 sont des coupes selon les lignes XI-XI et XII-XII de la figure 9.

Les figures ne représentent que l'une des deux faces latérales d'une unité de transport 1, formée par exemple d'un camion porteur 2 à châssis 3 et à cabine 4, du type porte-véhicules à plate-forme supérieure 5 de chargement, dans laquelle vient se déplacer une rallonge coulissante 6. Cette plate-forme porte le long de chacun de ses deux bords longitudinaux 7 un garde-corps fixe 8, tel que par exemple constitué d'un cordage 9 reposant sur des poteaux fixes 10, 11, 12.

On prévoit également au-dessus de la cabine 4 un autre garde-corps fixe 13 à cordage 14.

Conformément à l'invention, le garde-corps fixe 8 est prolongé par un garde-corps étendable 15 à liaisons filiformes du type cordage 16, formé, par exemple, de cordelettes, câbles ou filins 17, garde-corps rangé sous la plate-forme supérieure et qui sort de celle-ci, se déploie et s'étend puis inversement s'escamote sous la plate-forme sous l'effet des seuls mouvements de la rallonge coulissante 6 utilisée comme force motrice.

Les garde-corps étendables et les ensembles va-et-vient associés étant identiques le long de chaque bord longitudinal 7 de la rallonge et de la plate-forme supérieure, on ne décrit et ne représente qu'un seul exemplaire.

Les figures de 1 à 4 montrent un ensemble coulissant 18 de la rallonge 6 à deux poutres horizontales, une poutre principale fixe 19 solidaire de la plate-forme supérieure 5 de chargement, le long de laquelle coulisse une poutre guidée 20 solidaire de la rallonge coulissante 6, ou longeron de rallonge, formant ainsi l'équivalent de la coulisse d'un tiroir.

Comme indiqué, la plate-forme supérieure 5 présente, le long de chacun de ses bords 7, le garde-corps fixe 8 à cordage 9, ainsi qu'à la suite un des deux garde-corps étendables 15.

Chaque garde-corps étendable 15 équipant cet ensemble se compose principalement des éléments suivants existant au-dessus de la plate-forme supérieure de chargement 6 :
. un poteau vertical d'extrémité 21, porté par l'extrémité arrière de la rallonge coulissante 6, désolidarisable ou effaçable de celle-ci par simple déboîtement, rabattement ou autre moyen ;
. un poteau vertical de renvoi 22 escamotable, par exemple du type rabattable en position horizontale, porté par l'extrémité arrière de la plate-forme supérieure 5, sur laquelle il peut se rabattre quand le garde-corps est escamoté totalement. Ce poteau de renvoi 22 est équipé, sur une de ses faces latérales, d'une pluralité de poulies de renvoi, telles que 23, ou de supports du type passe-fils à l'intérieur desquels coulissent les cordelettes 17 du garde-corps 15 ;
. le cordage 16 formé de l'ensemble de cordelettes, câbles ou filins 17 à extrémités accrochées sur le poteau d'extrémité 21 par l'intermédiaire de pièces détachables, par exemple des manilles telles que 24.

Le garde-corps étendable 15 selon l'invention se poursuit à l'intérieur de la plate-forme supérieure 6 par un ensemble va-et-vient 25 portant un dispositif de verrouillage-déverrouillage 26 à verrouillage automatique assurant les mouvements simultanés d'accompagnement pour la rentrée et la sortie des liaisons filiformes.

Ces mouvements sont ceux d'un chariot 27 de déplacement relié aux cordelettes 17 et d'un support mobile de guidage 28 solidaire de la rallonge 6 se déplaçant par coulissement le long d'un élément rectiligne longitudinal, par exemple un tube-coulisse 29 solidaire de la plate-forme, et présent à l'intérieur et le long de la plate-forme.

Ce tube-coulisse peut être celui sur lequel se déplace la rallonge, mais il peut tout aussi bien être différent et indépendant.

Les cordelettes formant le cordage du garde-corps étendable selon l'invention traversent la plate-forme par une ouverture 30, et sont regroupées au droit de cette ouverture par une poulie de renvoiregroupement 31 montée, par exemple, sur la poutre principale fixe 18.

Cette poulie est destinée à regrouper les cordelettes en disposition alignée lors de la rentrée de la rallonge et à les distribuer en un faisceau s'étendant entre l'ouverture 30 et le poteau de renvoi 22.

On examinera maintenant plus particulièrement l'ensemble va-et-vient 25 à verrouillage automatique se déplaçant le long du tube-coulisse 29.

Il se compose d'une part du chariot de déplacement 27 portant les extrémités des cordelettes 17 et le dispositif de verrouillage-déverrouillage 26, et d'autre part, d'un bloc coulissant 32 solidaire de la rallonge 6. Entre le front arrière du bloc coulissant 32 et le front avant du chariot 27, est monté sur le tube-coulisse 29 un ressort de tension et de butée 33, destiné à maintenir en tension les cordelettes 17 et à pousser le chariot 27 en butée lors de la rentrée totale de la rallonge.

Il constitue également une interface élastique pour l'absorption des chocs et des variations de tension des cordelettes.

Pour la description qui suit, on se réfèrera plus particulièrement aux figures de 8 à 12.

Le chariot 27 se présente sous la forme d'un bloc conformé en "L", à corps 34 traversé par une cavité cylindrique en long, par laquelle il est monté coulissant sur le tube-coulisse 29, et à extension latérale 35 présentant un évidement longitudinal 36 sur une des parois duquel sont immobilisées les extrémités des cordelettes, sauf pour l'une d'entre elles dont il sera question ci-après.

A cet effet, des pièces de butée sphériques ou autres 37 sont solidarisées, par exemple serties, aux extrémités de l'âme de chaque cordelette.

L'extension latérale est traversée par l'extrémité d'une cordelette de commande 38 laissée libre pour actionner en déverrouillage le dispositif de verrouillage-déverrouillage 26.

Celui-ci se compose d'une pièce de verrouillage sous la forme d'une came pivotante 39 autour d'un axe 40 articulé à une chape 41 assurant la liaison avec l'extrémité de la cordelette de commande 38.

La came pivotante 39 vient s'encocher ou porter en appui-butée de blocage par son extrémité 42 dans une ouverture appropriée ou un front de butée 43 du tube-coulisse 29, en vue de l'immobilisation de l'ensemble.

Ce mouvement de verrouillage est provoqué par la force de poussée d'un ressort de rappel en verrouillage 44 coaxial à l'extrémité de la cordelette de commande.

La base du ressort 44 est montée dans un logement 45 conformé dans l'extension latérale 35.

Il réalise la fonction de verrouillage automatique dès que la configuration permet de libérer suffisamment en translation la cordelette de commande 38, par exemple lors du décrochage des manilles 24.

Les figures 2 et 3 montrent un exemple de garde-corps escamotable à quatre cordes en position partiellement déployé.

Le garde-corps déployé comporte trois zones de longueurs variables avec les mouvements d'extension ou de retrait de la rallonge dans la plate-forme de chargement :
. une zone arrière où les éléments filiformes du cordage sont parallèles et horizontaux, entre leurs points d'accrochage au poteau d'extrémité 21, chacun par une manille 24 ou analogue, et leur poulie de renvoi respective sur le mât de renvoi. Cette zone arrière forme le garde-corps proprement dit en position de protection ;
. une zone intermédiaire où les liaisons filiformes sont inclinées puis regroupées en faisceau depuis chacune de leur poulie de renvoi 23, jusqu'à la poulie de renvoi-regroupement 31 qui a pour fonction de changer leur direction et de les maintenir en disposition linéaire côte à côte à écartement horizontal constant sous la plate-forme ;
. une zone avant où les liaisons filiformes sont maintenues parallèles entre elles, et tendues horizontalement depuis la poulie de renvoi-regroupement 31, jusqu'à leur point de fixation sur l'ensemble va-et-vient à verrouillage automatique.

La longueur de chaque liaison filiforme est fonction de la hauteur de la poulie de renvoi correspondante et de la distance entre la poulie de renvoi-regroupement 31 et du poteau de renvoi 22.

Les différentes phases de fonctionnement de l'invention sont décrites ci-après.

Lors de la manoeuvre de rentrée du garde-corps, le poteau d'extrémité 21 se rapproche du poteau de renvoi 22 et la poutre mobile ou longeron de rallonge rentre dans la plate-forme.

Si l'on détache les manilles 24 de leur point de fixation sur le poteau d'extrémité 21, la tension dans le cordage diminue, et le ressort de tension et de butée 33 se relâche et s'allonge en éloignant le chariot de l'extrémité du longeron de rallonge, jusqu'à butée de fin de course. Le ressort de rappel en verrouillage 44 se détend et pousse la pièce de verrouillage 39 vers sa position de verrouillage sur le front d'appui-butée 43 avant du chariot 27.

On enlève ou on efface le poteau d'extrémité 21 en le déboîtant ou par rabattement, ou autre moyen et dès le premier mouvement de traction, par exemple, lors du raccrochage des manilles 24, la cordelette de commande 38 agit sur la pièce de verrouillage 39 qui pivote pour se déverrouiller en comprimant le ressort de rappel en verrouillage 44. L'ensemble des cordes ou câbles tirent le chariot 27 qui comprime alors le ressort de tension et de butée 33 contre le bloc coulissant 32 solidaire de l'extrémité du longeron de rallonge, puis l'ensemble chariot-longeron se déplace vers l'arrière de l'unité routière avec la rallonge, après que le poteau de renvoi 22 ait été relevé jusqu'à une position maximale. Le garde-corps se déploie ensuite jusqu'à la sortie maximale de la rallonge 6.

Comme on peut le remarquer par ce qui précède, le garde-corps ainsi constitué est étendable et rétractable par la seule force motrice du déplacement de la rallonge, dans et le long de la plate-forme, et verrouillable automatiquement en position escamotée.

De plus, le garde-corps accompagne la rallonge même dans une position intermédiaire de sortie et assure de la même façon la protection des personnes sur toute la longueur disponible de la rallonge.

Il est bien entendu qu'au-delà des moyens décrits, diverses modifications évidentes et variantes simples entrent dans le cadre de la présente invention.

## Revendications

1. Garde-corps extensible de bordure pour une unité routière du type porte-véhicules comprenant une plate-forme supérieure (5) à rallonge arrière (6) coulissant à l'intérieur de la plate-forme, à la manière d'un tiroir, garde-corps constitué de poteaux reliés entre eux par une pluralité de liaisons filiformes de protection parallèles entre elles, caractérisé en ce que les liaisons filiformes de protection composant le garde-corps se forment et s'étendent, puis se retirent par un mouvement de translation longitudinale.

2. Garde-corps selon la revendication 1, caractérisé en ce que les liaisons filiformes de protection composant le garde-corps se forment et s'étendent, puis se retirent avec et par le seul mouvement de translation en sortie puis en rentrée de la rallonge.

3. Garde-corps selon les revendications 1 ou 2, caractérisé en ce que les liaisons filiformes de protection composant le garde-corps se forment et s'étendent, puis se retirent d'une position de rangement dans laquelle les liaisons filiformes se trouvent disposées côte à côte le long de la rallonge (6) à l'intérieur de la plate-forme (5), dans une position de protection dans laquelle elles se trouvent étendues parallèlement à la rallonge, entre un poteau d'extrémité (21), entraîné par la rallonge (6), et un poteau de renvoi (22).

4. Garde-corps selon l'une quelconque des revendications précédentes, caractérisé en ce que les extrémités des liaisons filiformes sont immobilisées sur un ensemble va-et-vient (25) à verrouillage automatique, mobile sur un support rectiligne longitudinal agissant en traction ou en retrait pour l'extension ou le recul du garde-corps.

5. Garde-corps selon l'une quelconque des revendications précédentes, caractérisé en ce que le poteau d'extrémité est porté par la rallonge (6).

6. Garde-corps selon l'une quelconque des revendications précédentes, caractérisé en ce que les liaisons filiformes sortent du plan supérieur de la plate-forme (5), par une ouverture (30) de laquelle elles se déploient en faisceau jusqu'au poteau de renvoi (22).

7. Garde-corps selon l'une quelconque des revendications précédentes, caractérisé en ce que chaque liaison filiforme, en position de protection, est tendue parallèlement aux autres depuis un point de fixation mobile le long de la plate-forme, jusqu'à une poulie de renvoi-regroupement (31), et sort du plan supérieur de la plate-forme (5) par l'ouverture (30), et en ce qu'ensuite les liaisons se déploient en faisceau jusqu'à une pluralité de poulies de renvoi (23) montées latéralement sur le poteau de renvoi (22), pour s'étendre ensuite horizontalement jusqu'à leur point d'accrochage respectif sur le poteau d'extrémité (21).

8. Garde-corps selon l'une quelconque des revendications précédentes, caractérisé en ce que le poteau d'extrémité (21) est monté déboîtable ou escamotable à l'extrémité arrière de la rallonge, et en ce que les points d'accrochage des liaisons sur le poteau d'extrémité sont désolidarisables de celui-ci.

9. Garde-corps selon l'une quelconque des revendications précédentes, caractérisé en ce que le poteau de renvoi (22) est escamotable.

10. Garde-corps selon l'une quelconque des revendications précédentes, caractérisé en ce qu'il comporte un dispositif de verrouillage-déverrouillage (26) à verrouillage automatique supporté par un chariot (27) se déplaçant sur le support rectiligne longitudinal, sur lequel sont immobilisées les extrémités des liaisons filiformes, et se déverrouillant automatiquement dès le premier mouvement de traction sur les liaisons filiformes.

11. Garde-corps selon la revendication précédente, caractérisé en ce que le chariot (27) est mobile en translation sur un tube-coulisse (29) fixé sous la plate-forme de chargement, chariot (27) comportant une pièce mobile de verrouillage en forme de came (39) actionnée par l'une des liaisons filiformes.

12. Garde-corps selon la revendication précédente, caractérisé en ce que la liaison filiforme dite de commande (38), actionnant la came de verrouillage (39), est fixée sur celle-ci à travers un ressort de rappel en verrouillage (44) et une chape articulée (44), et en ce que les extrémités des autres liaisons filiformes sont fixées directement sur le chariot (27).

13. Garde-corps selon l'une des revendications 11 ou 12, caractérisé en ce que le chariot (27) est relié à un bloc coulissant (32) solidaire de la rallonge, et coulissant sur le support rectiligne longitudinal ou tube-coulisse (29), par l'intermédiaire d'un ressort de tension et de butée (33).

14. Garde-corps selon la revendication 13, caractérisé en ce que le ressort de tension et de butée (33) est monté sur le support rectiligne longitudinal ou tube-coulisse (29).

15. Garde-corps selon l'une quelconque des revendications 11 à 14, caractérisé en ce que le tube-coulisse (29) est celui le long duquel se déplace la rallonge (6).

## Claims

1. An extendible guard rail for the edge of a vehicle-transporter unit comprising an upper platform (5) with a rear extension (6) sliding inside the platform like a drawer, the guard rail being constituted by posts interconnected by a plurality of parallel thread-like protection links, characterized in that the thread-like protection links making up the guard rail take their shape and are extended and are subsequently retracted by a longitudinal translational movement.

2. A guard rail according to Claim 1, characterized in that the thread-like protection links making up the guard rail take their shape and are extended and are subsequently retracted with and solely by the translational outward and subsequent return movement of the extension.

3. Guard rail according to Claim 1 or Claim 2, characterized in that the thread-like protection links making up the guard rail take their shape and are extended and are subsequently retracted from a storage position in which the thread-like links are disposed side by side along the extension (6) inside the platform (5) to a protection position in which they are extended parallel to the extension between an end post (21) entrained by the extension (6) and an intermediate post (22).

4. Guard rail according to any one of the preceding claims, characterized in that the ends of the thread-like links are secured on an automatically-lockable assembly (25) movable to and fro on a straight longitudinal support and acting in traction or in retraction to extend or withdraw the guard rail.

5. Guard rail according to any one of the preceding Claims, characterized in that the end post is carried by the extension (6).

6. Guard rail according to any one of the preceding claims, characterized in that the thread-like links emerge from the top surface of the platform (5) through an opening (30) from which they are spread out in a group as far as the intermediate post (22).

7. Guard rail according to any one of the preceding claims, characterized in that, in the protection position, each thread-like link is stretched parallel to the others from a fixing point movable along the platform as far as an intermediate-regrouping pulley (31) and emerges from the upper surface of the platform (5) through the opening (30), and in that the links are then spread out in a group as far as a plurality of intermediate pulleys (23) mounted laterally on the intermediate post (22), and then extend horizontally as far as their respective coupling points on the end post (21).

8. Guard rail according to any one of the preceding claims, characterized in that the end post (21) is mounted on the rear end of the extension in a manner such that it can be removed or folded away, and in that the coupling points of the links on the end post can be released therefrom.

9. Guard rail according to any one of the preceding claims, characterized in that the intermediate post (22) can be folded away.

10. Guard rail according to any one of the preceding claims, characterized in that it comprises a locking-unlocking device (26) which locks automatically, supported by a carriage (27) which moves on the straight longitudinal support and on which the ends of the thread-like links are secured, the locking-unlocking device (26) unlocking automatically immediately upon the first pulling movement on the thread-like links.

11. Guard rail according to the preceding claim, characterized in that the carriage (27) is translatable on a slide tube (29) fixed under the load platform, the carriage (27) comprising a movable locking element in the form of a cam (39) operated by one of the thread-like links.

12. Guard rail according to the preceding Claim, characterized in that the so-called control thread-like link (38) which operates the locking cam (39) is fixed thereto via a spring (44) for returning it to the locking position and via an articulated fork (41), and in that the ends of the other thread-like links are fixed directly to the carriage (27).

13. Guard rail according to either of Claims 11 and 12, characterized in that the carriage (27) is connected, via a tension and thrust spring (33), to a sliding block (32) fixed to the extension and sliding on the straight longitudinal support or slide tube (29).

14. Guard rail according to Claim 12, characterized in that the tension and thrust spring (33) is mounted on the straight longitudinal support or slide tube (29).

15. Guard rail according to any one of Claims 11 to 14, characterized in that the slide tube (29) is that along which the extension (6) moves.

## Patentansprüche

1. Ausfahrbares Bordgeländer für einen Fahrzeug-Straßentransporter mit einer oberen Plattform (5) und einer in dieser nach Art eines Schubs verschiebbaren hinteren Verlängerung (6), bestehend aus Stützen und mehreren diese verbindenden, untereinander parallelen Geländersträngen, dadurch gekennzeichnet, daß die das Bordgeländer bildenden Geländerstränge sich durch eine translatorische Längsbewegung bilden bzw. ausdehnen und einziehen lassen.

2. Bordgeländer nach Anspruch 1, dadurch gekennzeichnet, daß die das Bordgeländer bildenden Geländer stränge sich ausschließlich mit und durch die Translationsbewegung der Verlängerung beim Aus- und Einfahren bilden und ausdehnen und einziehen lassen.

3. Bordgeländer nach Anspruch 1 oder 2, dadurch gekennzeichnet, daß die das Bordgeländer bildenden Geländerstränge sich bilden und ausdehnen und sich einziehen aus einer Position, in der sie sich nebeneinander liegend entlang der Verlängerung (6) in der Plattform (5) befinden, in eine Schutzposition, in der sie parallel zu der Verlängerung zwischen einer von dieser betätigten Endstütze (21) und einer Umlenkstütze (22) gestreckt sind.

4. Bordgeländer nach einem der vorangehenden Ansprüche, dadurch gekennzeichnet, daß die Enden der Geländerstränge an einer reversierbaren Einheit mit selbsttätiger Verriegelung (25) angebracht sind, die auf einem geradlinigen Längsträger beweglich ist, der auf Zug oder Schub für das Strecken oder das Einziehen des Bordgeländers wirkt.

5. Bordgeländer nach einem der vorangehenden Ansprüche, dadurch gekennzeichnet, daß die Endstütze von der Verlängerung (6) aufgenommen ist.

6. Bordgeländer nach einem der vorangehenden Ansprüche, dadurch gekennzeichnet, daß die Geländerstränge aus der oberen Ebene der Plattform (5) durch eine Öffnung (30) austreten, von der sie sich fächerartig zur Umlenkstütze (22) erstrecken.

7. Bordgeländer nach einem der vorangehenden Ansprüche, dadurch gekennzeichnet, daß die Geländerstränge in der Schutzposition jeweils parallel zueinander von einem entlang der Plattform beweglichen Befestigungspunkt bis zu einer Sammelrolle (31) gespannt sind, aus der Ebene der Plattform durch die Öffnung (30) austreten, anschließend sich fächerartig zu mehreren Umlenkrollen (23), die seitlich an der Umlenkstütze (22) angebracht sind, erstrecken und sich schließlich horizontal bis zu ihrer entsprechenden Verankerungsstelle an der Endstütze (21) erstrecken.

8. Bordgeländer nach einem der vorangehenden Ansprüche, dadurch gekennzeichnet, daß die Endstütze (21) am hinteren Ende der Verlängerung einfahrbar oder einklappbar angeordnet ist, und daß die Verankerung der Geländerstränge an der Endstütze von dieser lösbar sind.

9. Bordgeländer nach einem der vorangehenden Ansprüche, dadurch gekennzeichnet, daß die Umlenkstütze klappbar ist.

10. Bordgeländer nach einem der vorangehenden Ansprüche, dadurch gekennzeichnet, daß eine Verriegelungs- und Entriegelungsvorrichtung (26) mit selbsttätiger Verriegelung vorgesehen ist, die von einem auf dem geradlinigen Längsträger verlagerbaren Schlitten (27), an dem die Enden der Geländerstränge angebracht sind, getragen ist und sich bei beginnender Zugbewegung auf die Geländerstränge selbsttätig entriegelt.

11. Bordgeländer nach dem vorangehenden Anspruch, dadurch gekennzeichnet, daß der Schlitten (27) auf einem an der Ladeplattform befestigten Führungsrohr (29) beweglich ist und einen beweglichen Riegel in Form einer Kurve (39) aufweist, der von einem der Geländerstränge betätigbar ist.

12. Bordgeländer nach dem vorangehenden Anspruch, dadurch gekennzeichnet, daß der als Steuerstrang (38) wirkende, die Kurve des Riegels (39) betätigende Geländerstrang an diesem über eine Riegel-Rückstellfeder (44) und eine angelenkte Kappe (44) befestigt ist, und daß die Enden der anderen Geländerstränge unmittelbar am Schlitten (27) befestigt sind.

13. Bordgeländer nach Anspruch 11 oder 12, dadurch gekennzeichnet, daß der Schlitten (27) mit einem Gleitstück (32) verbunden ist, das mit der Verlängerung einteilig und auf dem geradlinigen Längsträger bzw. dem Führungsrohr (29) unter Zwischenschaltung einer Zug- und Anschlagfeder (33) verschiebbar ist.

14. Bordgeländer nach Anspruch 13, dadurch gekennzeichnet, daß die Zug- und Anschlagfeder (33) auf dem geradlinigen Längsträger bzw. dem Führungsrohr (21) angeordnet ist.

15. Bordgeländer nach einem der Ansprüche 11 bis 14, dadurch gekennzeichnet, daß auf der Rohrführung (29) die Verlängerung (6) längs verlagerbar ist.
